Europäisches Patentamt

European Patent Office

Office européen des brevets

(11) Publication number: **0 354 805**
**A2**

# (12) EUROPEAN PATENT APPLICATION

(21) Application number: **89308177.8**

(22) Date of filing: **11.08.89**

(51) Int. Cl.⁵: **G 02 C 13/00**

(30) Priority: **12.08.88 US 231562**

(43) Date of publication of application:
**14.02.90 Bulletin 90/07**

(84) Designated Contracting States:
**AT BE CH DE ES FR GB GR IT LI LU NL SE**

(71) Applicant: **VISTA VISION INC.**
**400 Oyster Point Boulevard**
**San Francisco California 94080 (US)**

(72) Inventor: **Weber, Helmut**
**736 Bamboo Terrace**
**San Rafael California 94903 (US)**

(74) Representative: **Woodcraft, David Charles et al**
**BROOKES & MARTIN High Holborn House 52/54 High Holborn**
**London, WC1V 6SE (GB)**

(54) **Ultrasonic lens cleaner.**

(57) An ultrasonic lens cleaner for contact lenses includes a tank for the lenses, the ultrasonic waves being generated by a transducer which is bonded to the exterior wall of the tank. Power for the transducer is actuated by a low power DMOS timer. Power to the timer is derived directly from a relatively high voltage source, e.g. a domestic A.C. supply, via a bridge rectifier and filter circuit housed within the confines of the cleaner. The cleaner is designed to be connected directly into an electrical socket outlet and the cleaner has a hinged cover which is arranged so that the power supply is automatically cut off unless the cover is in its closed position.

EP 0 354 805 A2

# Description

## ULTRASONIC LENS CLEANER

### Background of the Invention

The present invention relates to an ultrasonic contact lens cleaner and, more specifically, to an electronic ultrasonic contact lens cleaner which is supported by an electrical wall outlet.

The effectiveness of ultrasonically cleaning contact lenses has been recognized for some time. Typically, ultrasonic cleaning is performed by attaching an ultrasonic transducer, such as a piezo crystal, to a metallic cleaning tank having a bath in which the contact lenses are submerged. The ultrasonic power is applied to the piezo crystal, which converts the ultrasonic power into acoustic power through the wall of the metallic tank. However, the conversion is not completely efficient and some energy is lost in the form of heat. Cleaning power is derived from the acoustic power characteristics, which include principally acoustic energy and acoustic frequency. In order to obtain more acoustic energy, more ultrasonic power is applied, thereby requiring more electrical power, which in turn creates more wasted heat.

Electrical power for ultrasonic lens cleaners is normally provided by a separate AC voltage adapter unit that plugs into an electrical outlet, or a step-down transformer that reduces the standard 120 volt residential power to a voltage like 9 to 12 volts, which is easier to work with. In addition, in order to generate an ultrasonic frequency signal at high power, two circuits are used, one to generate the high frequency and one to increase the power via typically, a step-up transformer. Furthermore, in known ultrasonic lens cleaners, the timing circuit for a long timing period requires several components, and their timing accuracy is no better than ± 10 percent.

### Summary of the Present Invention

By the present invention, the aforementioned problems with known ultrasonic contact lens cleaners are overcome and additional advantages are provided.

More specifically, the ultrasonic lens cleaner according to the present invention employs a tight coupling arrangement between a piezo transducer and a metallic tank which provides a very high efficiency factor in transferring acoustic power across the wall of the tank. Thus, significantly less power is wasted. This is done by implementing the desired cleaning frequency using the combined thickness of the piezo crystal and the tank. The high efficiency of power transfer is obtained by tuning the physical dimensions of the piezo crystal, after it is attached to the tank surface, until a high acoustic coupling is achieved.

The ultrasonic lens cleaner according to the present invention eliminates the need for a transformer by deriving power directly from the electrical wall outlet by using a high voltage breakdown bridge rectifier circuit and the rippled voltage filtered by a capacitor to generate a usable DC voltage. The filtered, high voltage DC oscillates an autotransformer designed to oscillate at the proper ultrasonic frequency using the capacitance provided by the combined piezo/tank subsystem.

The ultrasonic lens cleaner according to the present invention provides a more accurate timer by employing an automatic on/off operation such that, when the cleaner is plugged into the electrical outlet, the timer will enable the power oscillator after a few milliseconds of time delay. The timer is a low power DMOS high-precision timer, with an accuracy of ±5 percent or better. The timer obtains power from a low voltage circuit provided by a low current Zener diode that operates directly from the filtered DC output. The timer in turn controls the high voltage DMOS Field Effect Transistor (FET) with a low driving power, which acts like an on/off switch to activate or deactivate the power oscillator.

The ultrasonic lens cleaner according to the present invention further includes an electrical/mechanical safety interlock comprising a plug having prongs to fit into a 120 volt electrical outlet, and receptacles for receiving pins protruding from a casing of the cleaner. When the plug is fully inserted onto the pins, it obstructs the opening of a cover of the cleaner casing, thereby preventing access to the metal surface of the cleaning tank. If the cover is forced open, the plug slides off of the pins, breaking the electrical contact. A stored position is provided for the plug, in which the plug is stored within the outline of the cleaner casing.

A low ultrasonic frequency is used in order to provide additional safety to the integrity of the contact lens material, and low power is used, again to protect the contact lens material, by keeping the temperature of the cleaning solution low.

When bonding a transducer direct to the tank, it should be born in mind that, apart from involving considerable acoustical losses, a thick bond impedes heat removal. It is, therefore, essential that the bond be as thin as possible. The thickness of the PKE disc cannot be chosen independently of the thickness of the wall tank. Stainless steel tanks with the usual wall thickness of 1 mm used in conjunction with 3 mm thick disc provides a satisfactory compromise between mechanical strength and efficiency. It is advantageous to use a tank without sharp corners which tend to impede the spreading out of the ultrasound waves.

To ensure reliable operation, all free ends of the stranded wire must be acoustically damped with a suitable damping agent (such as silicone). The radial vibrations of the transducer apply shear forces to the wall causing the wall to vibrate in flexure mode and thus radiate power into the liquid. Due to mechanical feedback, the transducer is caused to vibrate in a superimposed flexure mode.

Since the wall has in fact become part of the transducer, both form and thickness of the tank have great influence on the overall characteristics of the unit.

Optimum results can be obtained only if the tank data are taken into account. The transducer data, such as operating frequency, impedance, and maximum efficiency, can be determined only after samples have been made.

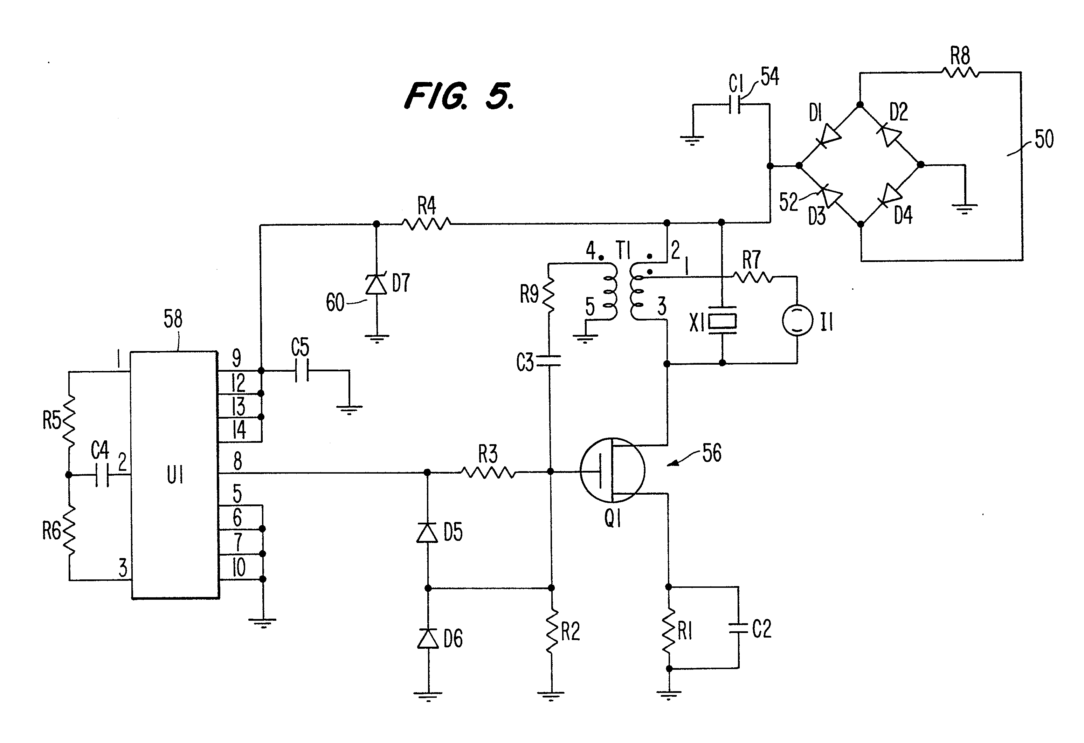

Referring to Fig. 5, the circuit for controlling the cleaner 10 drives power directly from a relatively high voltage source 50, such as 120 volt AC, and sends it through a bridge rectifier 52 and filters the rippled voltage with a capacitor 54. A power oscillator 56 will be enabled by a timer 58 after a few milliseconds of time delay. The timer 58 is a low power DMOS timer which obtains power from a low voltage circuit provided by a low current Zener diode 60 that operates directly from the filtered DC output. The timer in turn control the high voltage DMOS Field Effect Transistor with a low driving power, which acts like an on/off switch to activate or deactivate the power oscillator 56.

## Brief Description of the Drawings

Fig. 1 is a perspective view of the ultrasonic contact lens cleaner according to the present invention, showing the housing in an open position;

Fig. 2 is a perspective view of the cleaner of Fig. 1, but showing the housing in a closed position;

Fig. 3 is a cross-section with the cover in a closed position;

Fig. 4 is a cross-section with the cover in a partially open position; and

Fig. 5 is an electrical schematic of the cleaner according to the present invention.

## Detailed Description of the Preferred Embodiments

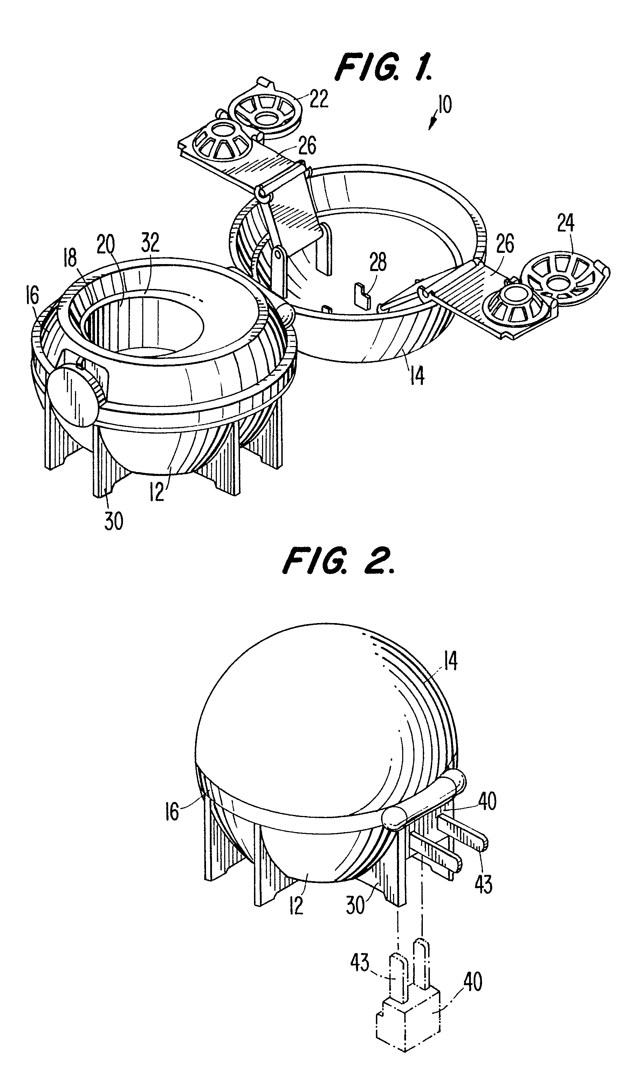

As can be seen from Fig. 1, the ultrasonic contact lens cleaner according to the present invention, which is designated generally by the reference numeral 10, includes a housing having a bottom 12 and a cover 14 hinged to the bottom, as well as a center molding 16 mounted on the bottom, the center molding defining an aperture 18 for receiving an ultrasonic pot or container 20. Two baskets 22, 24, one basket for holding each of a pair of contact lenses, are individually pivotally mounted to the interior of the cover. Each basket has a hinged top portion, which snaps closed over a bottom portion, and a mounting 26 for each basket can be folded until they engage stop members 28, so that the baskets project from the cover into the ultrasonic pot when the cover is closed. A plurality of integral feet 30 are provided on the bottom 12 to support the cleaner 10 when it is not in use.

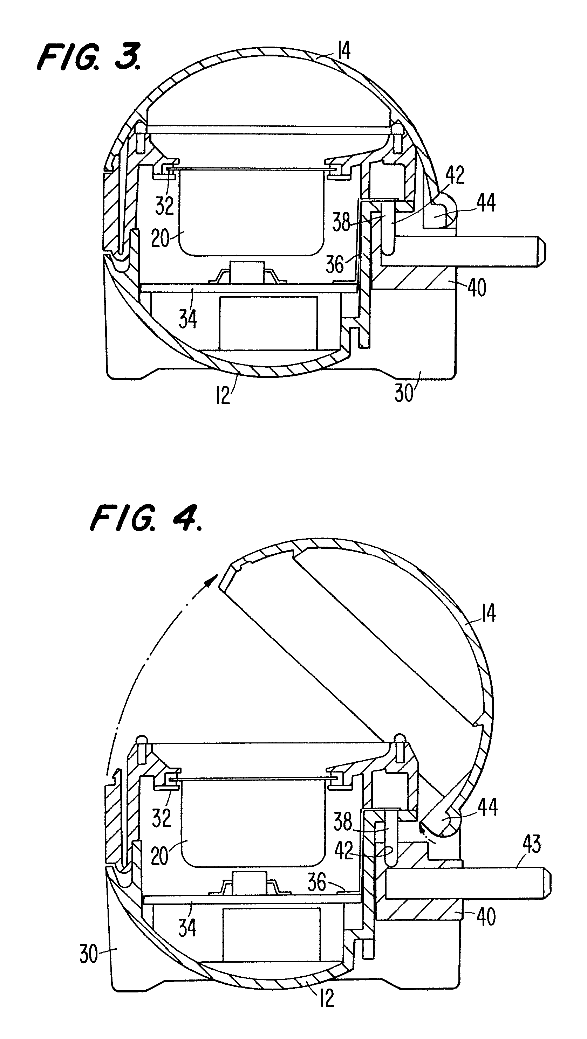

A flange 32 is formed around the rim of the ultrasonic pot to suspend it in the aperture of the center molding, and a piezoelectric crystal is affixed to an exterior surface of the pot. A lead from the crystal extends to a circuit provided on a printed circuit board assembly 34 positioned in the bottom of the housing under the center molding (see Figs. 3 and 4). Power leads 36 extend from the printed circuit board assembly to pins 38 exposed to the exterior of the housing so that the lens cleaner can be connected to a source of electrical power, such as 120 volt AC.

The connection between the pins and the source of power, such as a wall receptacle, is made by a removable plug 40, which has receptacles 42 for fitting onto the pins, as well as prongs 43 for projecting into a wall outlet and supporting the lens cleaner on the wall outlet.

When the cover is in an open position, a portion 44 of the cover, and more specifically, a portion of the hinge, covers the pins so that the removable plug cannot be installed on the pins. When the cover is moved to a closed position, the pins are exposed and are accessible so that the removable plug can be installed thereon. When the plug is in position on the pins, it lies in the path of movement of the cover between its closed position and open position, and thereby obstructs and prevents the opening of the cover. By so doing, the plug prevents the cover from being opened while the cleaner is in operation. If attempts are made to force the cover open against the obstructing influence of the plug, the cover will tend to push the plug off of the pins so that the electrical connection is interrupted, as shown in Fig. 4.

A recess is defined between two legs 30 on the housing bottom adjacent to the pins, so that the removable plug can be inserted and the plug can be held frictionally in a storage position within the outline of the housing, as is shown by the phantom plug 40 in Fig. 2.

## Claims

1. An ultrasonic cleaner for contact lenses, comprising:
a housing;
a container for holding a liquid in which the contact lenses are to be cleaned;
means for providing ultrasonic power for said container; and
means for connecting said ultrasonic power means to a source of electrical power, said connecting means comprising first formations associated with said housing, and a plug having second formations removably mating with said first formations and third formations for mating with compatible formations associated with the source of electrical power.

2. The ultrasonic cleaner according to claim 1 wherein said second formations comprise a receptacle and said third formations are prongs.

3. The ultrasonic cleaner according to claim 1, wherein said plug comprises means for preventing access to said container when said second formations are mating with said first formations such that electrical power can flow through said plug to said ultrasonic power means.

4. The ultrasonic cleaner according to claim 3, wherein said housing includes a base and a cover movable between a closed position and an open position, and said plug locks said cover in the closed position.

5. The ultrasonic cleaner according to claim 4, further comprising means for moving said second formations out of mating engagement with said first formations in response to said cover being moved against the locking action of said plug, whereby electrical power cannot flow through said plug to said ultrasonic power means.

6. The ultrasonic cleaner according to claim 1, wherein said housing defines an outline and has a storage space for said plug within said outline.

7. An ultrasonic cleaner for contact lenses, comprising:

a container for holding a liquid in which the contact lenses are to be cleaned; and
means for providing ultrasonic power for said container, said ultrasonic power means comprising an ultrasonic transducer attached to said container.

8. A method of making an ultrasonic cleaner for contact lenses having a container for holding a liquid in which the contact lens are to be cleaned and an ultrasonic transducer, comprising:
attaching the ultrasonic transducer to the tank.

9. An ultrasonic cleaner for contact lenses, comprising:
a container for holding a liquid in which the contact lenses are to be cleaned;
an ultrasonic transducer attached to said container; and
means for providing electrical power to said ultrasonic transducer, said electrical power means comprising a breakdown bridge rectifier circuit connected to a high voltage source of power.

## FIG. 1.

## FIG. 2.

**FIG. 3.**

**FIG. 4.**

FIG. 5.